(19) Europäisches Patentamt / European Patent Office / Office européen des brevets

(11) **EP 4 657 326 B1**

(12) **EUROPEAN PATENT SPECIFICATION**

(45) Date of publication and mention
of the grant of the patent:
**08.04.2026 Bulletin 2026/15**

(21) Application number: **25167459.4**

(22) Date of filing: **31.03.2025**

(51) International Patent Classification (IPC):
**G06N 3/096** (2023.01)

(52) Cooperative Patent Classification (CPC):
**G06N 3/096**

(54) **DEVICE FOR DIAGNOSING DEFECT USING MODEL BASED ON CONTINUAL LEARNING AND METHOD THEREFOR**

VORRICHTUNG ZUR FEHLERDIAGNOSE UNTER VERWENDUNG EINES MODELLS AUF BASIS VON KONTINUIERLICHEM LERNEN UND VERFAHREN DAFÜR

DISPOSITIF DE DIAGNOSTIC DE DÉFAUT À L'AIDE D'UN MODÈLE BASÉ SUR UN APPRENTISSAGE CONTINU ET PROCÉDÉ ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.05.2024 KR 20240069328**
**16.10.2024 KR 20240141039**

(43) Date of publication of application:
**03.12.2025 Bulletin 2025/49**

(73) Proprietor: **Doosan Enerbility Co., Ltd.**
**Seongsan-gu**
**Changwon-si, Gyeongsangnam-do 51711 (KR)**

(72) Inventors:
• **YU, Jun Sang**
**Seongnam-si, Gyeonggi-do 13607 (KR)**
• **LEE, Jung Min**
**Seoul 06359 (KR)**

(74) Representative: **BCKIP Part mbB**
**MK1**
**Landsbergerstraße 98, 3.Stock**
**80339 München (DE)**

(56) References cited:
**WO-A1-2023/182794 US-A1- 2025 014 167**

• USAMENTIAGA RUBEN: "Semiautonomous Pipeline Inspection Using Infrared Thermography and Unmanned Aerial Vehicles", IEEE TRANSACTIONS ON INDUSTRIAL INFORMATICS, IEEE SERVICE CENTER, NEW YORK, NY, US, vol. 20, no. 2, 1 February 2024 (2024-02-01), pages 2540 - 2550, XP011958725, ISSN: 1551-3203, [retrieved on 20230724], DOI: 10.1109/TII.2023.3295409
• YUJIANG HE ET AL: "CLeaR: An Adaptive Continual Learning Framework for Regression Tasks", ARXIV.ORG, CORNELL UNIVERSITY LIBRARY, 201 OLIN LIBRARY CORNELL UNIVERSITY ITHACA, NY 14853, 16 July 2021 (2021-07-16), XP091002386, DOI: 10.1186/ S42467-021-00009-8
• YANG JIFAN ET AL: "Continuous Learning for Blind Image Quality Assessment with Contrastive Transformer", ICASSP 2023 - 2023 IEEE INTERNATIONAL CONFERENCE ON ACOUSTICS, SPEECH AND SIGNAL PROCESSING (ICASSP), IEEE, 4 June 2023 (2023-06-04), pages 1 - 5, XP034448837, DOI: 10.1109/ICASSP49357.2023.10096042

**Description**

BACKGROUND OF THE INVENTION

Field of the Invention

The present invention relates to a defect diagnosis technology and, more particularly, to a device for diagnosing a defect using a model based on continual learning and a method therefor. In doing so, the present invention involves selecting and updating training data for continual learning.

Description of the Related Art

Radiographic test (RT) is a testing method that selects radiation such as X-rays or gamma rays according to usage conditions and purpose, passes radiation through a test specimen, and forms an image on an X-ray film, so as to detect a defect inside the test specimen, and is currently the most widely used non-destructive testing method for detecting internal defects.

The main task of defect diagnosis based on artificial intelligence-based industrial radiographic test (RT) is for object detection, and the accuracy of object detection should be maintained over time. In addition, when operating an artificial intelligence (AI) model, a method for transfer learning is used as a common method for relearning features of a new data set generated over time. However, in transfer learning, catastrophic forgetting, which reduces the accuracy of previous data, may occur. In a case of relearning all of a previous training data set in order to prevent the catastrophic forgetting, a problem regarding storage space occurs. A solution is needed to address this issue by enabling the model to retain previously learned knowledge while adapting to new data without excessive storage requirements.

Publication "Semiautonomous Pipeline Inspection Using Infrared Thermography and Unmanned Aerial Vehicles" by USAMENTIAGA RUBEN (IEEE TRANSACTIONS ON INDUSTRIAL INFORMATICS, IEE SERVICE CENTER, NEW YORK, NY, US, vol. 20, no. 2, 1 February 2024, pages 2540-2550) discloses a semiautonomous inspection method that uses unmanned aerial vehicles and infrared thermography to inspect pipelines. The method for data processing is automated, utilizing vision-based detection and tracking techniques, and leveraging the power of deep learning algorithms to ensure analysis and inspection.

SUMMARY OF THE INVENTION

An objective of the present invention is to provide a device for diagnosing a defect using a model based on continual learning and a method therefor.

To achieve this objective, the present invention provides a method for diagnosing a defect according to claim 1 that involves selecting training data for continual learning and updating training data for continual learning. In addition, the present invention provides a device for diagnosing a defect according to claim 9.

According to the present invention, a method for diagnosing a defect includes: training, by a training unit, a current model using a buffer training data set previously stored in a buffer and a current training data set; and detecting, by a detection unit, the defect in a radiographic image using the current model when the radiographic image is input.

The training of the current learning model may include: loading, by the training unit, the buffer training data set, which is training data selected according to a degree of influence on prediction performance of the current model from among a past training data set in continual learning; and training the current model using the buffer training data set and the current training data set.

According to the present invention, the method further includes: calculating, by a switching unit, after the training of the current model, a degree of change from models trained in at least two previous training rounds of the current model in the continual learning to the current model; determining, by the switching unit, whether the degree of change is greater than or equal to a reference value; determining, by the switching unit, an update to the buffer training data set when the degree of change is greater than or equal to the reference value; calculating, by an update unit, a degree of influence of each of data points in the current training data set on prediction performance of a future model when the future model to be trained in a next training round of the current model is trained using the current training data set in the continual learning; and updating, by the update unit, the buffer training data set by selecting a predefined number of the data points in order of higher to lower degrees of influence.

The calculating of the degree of influence may include: calculating, by the update unit, a plasticity score representing a first probability that a first prediction value of the current model and a second prediction value of the future model are different from each other for the data points in the current training data set; calculating, by the update unit, a stability score representing a second probability that the first prediction value of the current model and a third prediction value of a past model trained in a previous training round of the current model, are different from each other for the data points in the current training data set; and determining, by the update unit, a weighted average of the plasticity score and the stability score as the degree of influence.

Calculating a stability score may be performed according to Equation

$$p(\hat{y}^{t-1} \neq \hat{y}^{t} \mid x^{t}) = 1 - p(\hat{y}_n^{t-1} \mid \hat{y}_n^{t}, x_n^{t}),$$

wherein $p(\hat{y}^{t-1} \neq \hat{y}^{t} \mid x^{t})$ denotes the stability score, $x_n^{t}$ denotes the data points in the current training data set, $\hat{y}_n^{t-1}$ denotes the third prediction value of a past model, and $\hat{y}_n^{t}$ denotes the first prediction value of the current model.

Calculating a plasticity score may be performed according to Equation

$$p(\hat{y}^{t+1} \neq \hat{y}^{t} \mid x^{t}) = 1 - p(\hat{y}_n^{t+1} \mid \hat{y}_n^{t}, x_n^{t}),$$

wherein $p(\hat{y}^{t+1} \neq \hat{y}^{t} \mid x^{t})$ denotes the plasticity score, $x_n^{t}$ denotes the data points in the current training data set, $\hat{y}_n^{t+1}$ denotes the second prediction value of the future model, and $\hat{y}_n^{t}$ denotes the first prediction value of the current model.

The calculating of the plasticity score may derive the prediction value of the future model according to

Equation

$$p(\hat{y}^{t+1} \mid x^{t}) = f(GP(\theta^{t}), x),$$

wherein $\hat{y}_n^{t+1}$ denotes the second prediction value of the future model, $x$ denotes the data points in the current training data set, and $GP(\theta^{t})$ denotes a gradient vector predicted by the future model through a gradient prediction model.

According to the present invention, the calculating of the degree of influence may be performed according to

Equation

$$S_i = \lambda \cdot \text{Plasticity}_i + (1 - \lambda) \cdot \text{Stability}_i,$$

wherein S denotes the degree of influence, i denotes an index of the data points in the current training data set, $\lambda$ denotes a weight, Plasticity denotes a plasticity score, and Stability denotes a stability score.

The calculating of the degree of change may derive the degree of change according to a degree of similarity between a first gradient vector representing a change between a first weight vector of the current model and a second weight vector of a first past model trained in a previous training round of the current model, and a second gradient vector representing a second change between the second weight vector of the first past model and a third weight vector of a second past model trained in a previous training round of the first past model.

The degree of similarity may be calculated according to

Equation

$$CS = \frac{g_{t-1}^{T} g_t}{\|g_{t-1}\|_2 \|g_t\|_2},$$

wherein CS denotes the degree of similarity, $g_t$ denotes the first gradient vector between the first weight vector of the current model and the second weight vector of the first past model, $g_{t-1}$ denotes the second gradient vector between the second weight vector of the first past model and the third weight vector of the second past model, and $g_{t-1}^T$ denotes a transpose vector of the second gradient vector.

According to the present invention, a device for diagnosing a defect includes: a training unit configured to train a current model using a buffer training data set previously stored in a buffer and a current training data set; and a detection unit configured to detect the defect in a radiographic image using the current model when the radiographic image is input.

The training unit may load the buffer training data set, which is training data selected according to a degree of influence on prediction performance of the current model from among a past training data set in continual learning, and train the current model using the buffer training data set and the current training data set.

According to the present invention, the device further includes: a switching unit configured to calculate a degree of change from models trained in at least two previous training rounds of the current model in the continual learning to the current model, determine whether the degree of change is greater than or equal to a reference value, and determine an update to the buffer training data set when the degree of change is greater than or equal to the reference value; and an update unit configured to calculate a degree of influence of each of data points in the current training data set on prediction performance of a future model when the future model to be trained in a next training round of the current model is trained using the current training data set in the continual learning, and update the buffer training data set by selecting a predefined number of the data points in order of higher to lower degrees of influence.

The update unit may calculate a plasticity score representing a first probability that a first prediction value of the current model and a second prediction value of the future model are different from each other for the training data of the current training data set, calculate a stability score representing a second probability that the first prediction value of the current model and a third prediction value of a past model trained in a previous training round of the current model, are different from each other for the data points in the current training data set, and determine a weighted average of the plasticity score and the stability score as the degree of influence.

The update unit may calculate a stability score according to

Equation

$$p(\hat{y}^{t-1} \neq \hat{y}^t \mid x^t) = 1 - p(\hat{y}_n^{t-1} \mid \hat{y}_n^t, x_n^t),$$

wherein $p(\hat{y}^{t-1} \neq \hat{y}^t \mid x^t)$ denotes the stability score, $x_n^t$ denotes the data points in the current training data set, $\hat{y}_n^{t-1}$ denotes the third prediction value of a past model, and $\hat{y}_n^t$ denotes the first prediction value of the current model.

The update unit may calculate a plasticity score according to

Equation

$$p(\hat{y}^{t+1} \neq \hat{y}^t \mid x^t) = 1 - p(\hat{y}_n^{t+1} \mid \hat{y}_n^t, x_n^t),$$

wherein $p(\hat{y}^{t+1} \neq \hat{y}^t \mid x^t)$ denotes the plasticity score, $x_n^t$ denotes the data points in the current training data set, $\hat{y}_n^{t+1}$ denotes a second prediction value of the future model, and $\hat{y}_n^t$ denotes the first prediction value of the current model.

The update unit may derive the prediction value of the future model according to

Equation

$$p(\hat{y}^{t+1} \mid x^t) = f(GP(\theta^t), x),$$

wherein $\hat{y}_n^{t+1}$ denotes the second prediction value of the future model, $x$ denotes the data points in the current training data set, and $GP(\theta^t)$ denotes a gradient vector predicted by the future model through a gradient prediction model.

The update unit calculates the degree of influence according to

Equation

$$S_i = \lambda \cdot \text{Plasticity}_i + (1 - \lambda) \cdot \text{Stability}_i,$$

wherein S denotes the degree of influence, i denotes an index of the data points in the current training data set, $\lambda$ denotes a weight, Plasticity denotes a plasticity score, and Stability denotes a stability score.

The switching unit may derive the degree of change according to the degree of similarity between a first gradient vector representing a first change between a first weight vector of the current model and a second weight vector of a first past model trained in the previous training round of the current model, and a second gradient vector representing a second change between the second weight vector of the first past model and a third weight vector of a second past model trained in a previous training round of the first past model.

The switching unit may calculate the degree of similarity according to

Equation

$$CS = \frac{g_{t-1}^T \, g_t}{\|g_{t-1}\|_2 \|g_t\|_2},$$

wherein CS denotes the degree of similarity, $g_t$ denotes the first gradient vector between the first weight vector of the current model and the second weight vector of the first past model, $g_{t-1}$ denotes the second gradient vector between the second weight vector of the first past model and the third weight vector of the second past model, and $g_{t-1}^T$ denotes a transpose vector of the second gradient vector.

According to an exemplary embodiment which is not part of the claimed invention, there is provided a method for selecting training data, the method including: training, by a training unit, a current model using a buffer training data set previously stored in a buffer and a current training data set; calculating, by an update unit, a degree of influence of each of data points in the current training data set on prediction performance of a future model when the future model to be trained in a next training round of the current model is trained using the current training data set in a continual learning; and updating, by the update unit, the buffer training data set by selecting a predefined number of the data points in order of higher to lower degrees of influence.

The calculating of the degree of influence may include: calculating, by the update unit, a plasticity score representing a probability that a prediction value of the current model and a prediction value of the future model are different from each other for the data points in the current training data set; calculating, by the update unit, a stability score representing a probability that the prediction value of the current model and a prediction value of a past model trained in a previous training round of the current model, are different from each other for the data points in the current training data set; and calculating, by the update unit, a weighted average of the plasticity score and the stability score as the degree of influence.

In the calculating of the stability score, the update unit may calculate the stability score according to

Equation

$$p(\hat{y}^{t-1} \neq \hat{y}^t \mid x^t) = 1 - p(\hat{y}_n^{t-1} \mid \hat{y}_n^t, x_n^t),$$

wherein $p(\hat{y}^{t-1} \neq \hat{y}^t \mid x^t)$ denotes the stability score, denotes the data points in the current training data set, $\hat{y}_n^{t-1}$ denotes a prediction value of a past model, and $\hat{y}_n^t$ denotes a prediction value of the current model.

In the calculating of the plasticity score, the update unit may calculate the plasticity score according to

Equation

$$p(\hat{y}^{t+1} \neq \hat{y}^t \mid x^t) = 1 - p(\hat{y}_n^{t+1} \mid \hat{y}_n^t, x_n^t),$$

wherein $p(\hat{y}^{t+1} \neq \hat{y}^t \mid x^t)$ denotes the plasticity score, denotes the data points in the current training data set, $\hat{y}_n^{t+1}$ denotes a prediction value of the future model, and $\hat{y}_n^t$ denotes a prediction value of the current model.

The method for selecting the training data further includes: creating, by the training unit, before calculating the degree of influence, derived training data, which is training data derived from the current training data set; and training, by the training unit, a gradient prediction model using the derived training data.

In the calculating of the plasticity score, the switching unit may calculate the plasticity score using the gradient prediction model.

Derived training data may include: a modified weight vector for a target layer of the current model each time the current model is iteratively trained by dividing the current training data set into epoch units by the training unit; and a target gradient vector representing a difference between a weight vector of a current epoch and a weight vector of a previous epoch each time the current model is iteratively trained by dividing the current training data set into epoch units.

The calculating of the plasticity score may include deriving, by the update unit, a prediction value of the future model according to

Equation

$$p(\hat{y}^{t+1} \mid x^t) = f(GP(\theta^t), x),$$

wherein $\hat{y}_n^{t+1}$ denotes the prediction value of the future model, $x$ denotes the data points in the current training data set, and $GP(\theta^t)$ denotes a gradient vector predicted by the future model through a gradient prediction model.

In the calculating of the degree of influence, the update unit may calculate the degree of influence according to

Equation

$$S_i = \lambda \cdot \text{Plasticity}_i + (1 - \lambda) \cdot \text{Stability}_i,$$

wherein S denotes the degree of influence, i denotes an index of the current training data, $\lambda$ denotes a weight, Plasticity denotes a plasticity score, and Stability denotes a stability score.

According to another exemplary embodiment which is not part of the claimed invention, there is provided a device for selecting training data, the device including: a training unit configured to train a current model using a buffer training data set previously stored in a buffer and a current training data set; and an update unit configured to calculate a degree of influence of each of data points in the current training data set on prediction performance of a future model when the future model to be trained in a next training round of the current model is trained using the current training data set in continual learning, and update the buffer training data set by selecting a predefined number data points in order of higher to lower degrees of influence.

The update unit may calculate a plasticity score representing a probability that a prediction value of the current model and a prediction value of the future model are different from each other for the data points in the current training data set, calculate a stability score representing a probability that the prediction value of the current model and a prediction value of a first past model trained in a first past training round, which is a previous training round of the current learning model, are different from each other for the data points in the current training data set, and calculate a weighted average of the plasticity score and the stability score as the degree of influence.

The update unit may calculate a stability score according to Equation

$$p(\hat{y}^{t-1} \neq \hat{y}^t \mid x^t) = 1 - p(\hat{y}_n^{t-1} \mid \hat{y}_n^t, x_n^t),$$

wherein $p(\hat{y}^{t-1} \neq \hat{y}^t \mid x^t)$ denotes the stability score, $x_n^t$ denotes the data points in the current training data set, $\hat{y}_n^{t-1}$ denotes a prediction value of a past model, and $\hat{y}_n^t$ denotes a prediction value of the current model.

The update unit may calculate a plasticity score according to

Equation

$$p(\hat{y}^{t+1} \neq \hat{y}^t \mid x^t) = 1 - p(\hat{y}_n^{t+1} \mid \hat{y}_n^t, x_n^t),$$

where $p(\hat{y}^{t+1} \neq \hat{y}^t \mid x^t)$ denotes the plasticity score, $x_n^t$ denotes the data points in the current training data set, $\hat{y}_n^{t+1}$ denotes a prediction value of the future model, and $\hat{y}_n^t$ denotes a prediction value of the current model.

The training unit may create derived training data, which is training data derived from the current training data set, and train the gradient prediction model using the derived training data, and the switching unit may calculate the plasticity score using the gradient prediction model.

The derived training data may include: a modified weight vector for a target layer of the current model each time the current model is iteratively trained by dividing the current training data set into epoch units by the training unit; and a target gradient vector representing a difference between a weight vector of a current epoch and a weight vector of a previous epoch each time the current model is iteratively trained by dividing the current training data set into epoch units.

The update unit may derive a prediction value of the future model according to

Equation

$$p(\hat{y}^{t+1} \mid x^t) = f(GP(\theta^t), x),$$

where $\hat{y}_n^{t+1}$ denotes the prediction value of the future model, $x$ denotes the data points in the current training data set, and $GP(\theta^t)$ denotes a gradient vector predicted by the future model through a gradient prediction model.

The update unit may calculate the degree of influence according to

Equation

$$S_i = \lambda \cdot \text{Plasticity}_i + (1 - \lambda) \cdot \text{Stability}_i,$$

wherein S denotes the degree of influence, i denotes an index of the data points in the current training data set, $\lambda$ denotes a weight, Plasticity denotes a plasticity score, and Stability denotes a stability score.

According to still another exemplary embodiment which is not part of the claimed invention, there is provided a method for updating training data, the method including: training, by a training unit, a current model using a buffer training data set previously stored in a buffer and a current training data set; calculating, by a switching unit, a degree of change from models trained in at least two previous training rounds of the current model in the continual learning to the current model; determining, by the switching unit, whether the degree of change is greater than or equal to a reference value; determining, by the switching unit, an update to the buffer training data set when the degree of change is greater than or equal to the reference value; and updating, by an update unit, the buffer training data set by extracting at least a predefined number of data points from the current training data set.

In the calculating of the degree of change, the switching unit may derive the degree of change according to a degree of similarity between a first gradient vector representing a change between a weight vector of the current model and a weight vector of a first past model trained in a previous training round of the current model, and a second gradient vector representing a change between the weight vector of the first past model and a weight vector of a second past model trained in a previous training round of the first past model.

The degree of similarity may be calculated according to

Equation

$$CS = \frac{g_{t-1}^T \, g_t}{\|g_{t-1}\|_2 \|g_t\|_2}$$

wherein CS denotes the degree of similarity, $g_t$ denotes the first gradient vector between the weight vector of the current model and the weight vector of the first past model, $g_{t-1}$ denotes the second gradient vector between the weight vector of the first past model and the weight vector of the second past model, and $g_{t-1}^T$ denotes a transpose vector of the second gradient vector.

In the determining of whether the degree of change is greater than or equal to the reference value, the switching unit may determine that the degree of change is greater than or equal to the reference value when the degree of similarity between the first gradient vector and the second gradient vector is less than the reference value.

The method may further include deleting, by the switching unit, the current training data set when the degree of change is less than the reference value after the determining of whether the degree of change is greater than or equal to the reference value.

The buffer training data set previously stored in the buffer may be training data selected according to a degree of influence on prediction performance of the current model from among a past training data set in continual learning.

According to an exemplary embodiment which is not part of the claimed invention, there is provided a device for updating training data, the device including: a training unit configured to train a current model using a buffer training data set previously stored in a buffer and a current training data set; a switching unit configured to calculate a degree of change from models trained in at least two previous training rounds of the current model in the continual learning to the current model, determine whether the degree of change is greater than or equal to a reference value, and determine an update to the buffer training data set when the degree of change is greater than or equal to the reference value after the determining of whether the degree of change is greater than or equal to the reference value; and an update unit configured to update the buffer training data set by extracting a predefined number of data points from the current training data set.

The switching unit may derive the degree of change according to a degree of similarity between a first gradient vector representing a change between a weight vector of the current model and a weight vector of a first past model trained in a previous training round of the current learning model, and a second gradient vector representing a change between the weight vector of the first past model and a weight vector of a second past model trained in a previous training round of the first past model.

The switching unit may calculate the degree of similarity according to

Equation

$$CS = \frac{g_{t-1}^T \, g_t}{\|g_{t-1}\|_2 \|g_t\|_2}$$

wherein CS denotes the degree of similarity, $g_t$ denotes the first gradient vector between the weight vector of the current model and the weight vector of the first past model, $g_{t-1}$ denotes the second gradient vector between the weight vector of the first past model and the weight vector of the second past model, and $g_{t-1}^T$ denotes a transpose vector of the second gradient vector.

The switching unit may determine that the degree of change is greater than or equal to the reference value when the degree of similarity between the first gradient vector and the second gradient vector is less than the reference value.

The switching unit may delete the current training data set when the degree of change is less than the reference value.

The buffer training data set previously stored in the buffer may be training data selected according to the degree of influence on prediction performance of the current model from among a past training data set in continual learning.

According to the present invention, the buffer training data set is updated according to the prediction performance of the future model, and continual learning is applied to the model using a new training data set together with the buffer training data set therethrough, so as to maximally reduce a storage space while overcoming catastrophic forgetting, whereby the model for providing high accuracy at minimal cost may be continuously provided.

BRIEF DESCRIPTION OF THE DRAWINGS

FIG. 1 is a view illustrating a configuration of a system for diagnosing a defect using a model based on continual learning according to an exemplary embodiment of the present invention.
FIG. 2 is a view illustrating a configuration of a device for diagnosing a defect using a model based on continual learning according to the exemplary embodiment of the present invention.
FIG. 3 is a view illustrating a training data set and a model according to training rounds in continual learning according to the exemplary embodiment of the present invention.
FIG. 4 is a view illustrating a method for selecting training data for continual learning according to the exemplary embodiment of the present invention.
FIG. 5 is a flowchart illustrating a method for training a gradient prediction model according to the exemplary embodiment of the present invention.
FIG. 6 is a flowchart illustrating a method for calculating a degree of influence of training data on prediction performance of a future model according to the exemplary embodiment of the present invention.
FIG. 7 is a flowchart illustrating a method for diagnosing a defect using a model based on continual learning according to the exemplary embodiment of the present invention.
FIG. 8 is an example screen for illustrating the method for diagnosing the defect using the model based on continual learning according to the exemplary embodiment of the present invention.
FIG. 9 is a view illustrating a computing device according to the exemplary embodiment of the present invention.

DETAILED DESCRIPTION OF EMBODIMENTS OF THE INVENTION

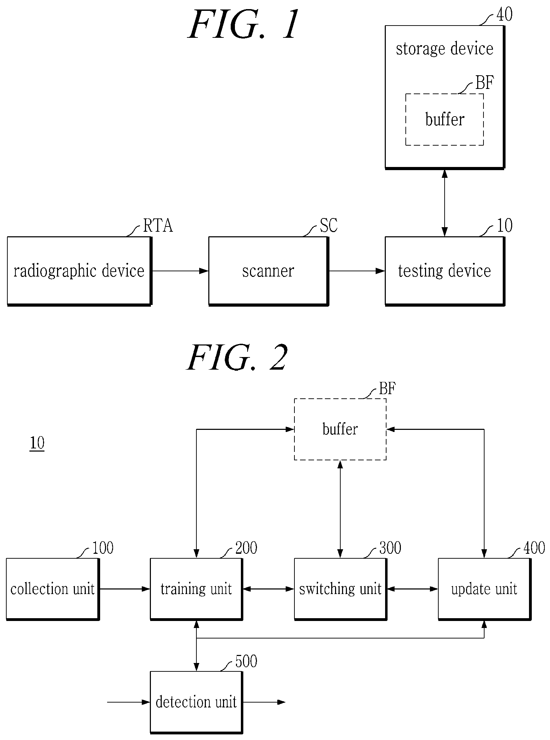

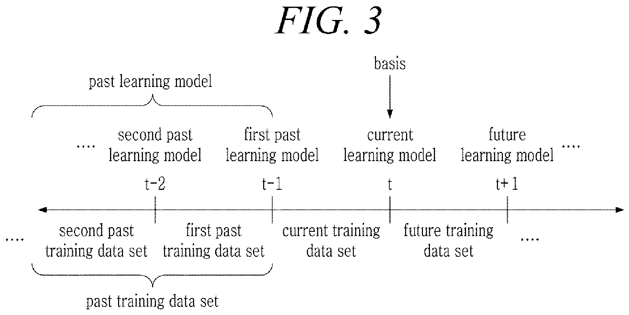

The present invention may be modified in various ways and may have various exemplary embodiments, and thus a specific exemplary embodiment will be exemplified and described in detail in the detailed description. However, this is not intended to limit the present invention to a particular disclosed form.
The terminology used in the present disclosure is for the purpose of describing particular exemplary embodiments only and is not intended to be limiting. As used herein, the singular forms are intended to include the plural forms as well, unless the context clearly indicates otherwise. In addition, it will be further understood that the terms "comprise, " "include," "have," etc. when used in the present disclosure, specify the presence of stated features, integers, steps, operations, elements, components, and/or combinations thereof but do not preclude the possibility of the presence or addition of one or more other features, integers, steps, operations, elements, components, and/or combinations thereof.
Prior to this, the terms or words used in the present disclosure and claims are not to be construed as being limited to their ordinary or dictionary meanings, and should be interpreted based on the principle that inventors may properly define the concept of each term in order to best describe their embodiments. In particular, in the exemplary embodiment of the present invention, "estimation" or "inference" means deriving a result calculated according to what the model has learned. The model may refer to a machine learning model, deep learning model, or any other artificial intelligence model.
First, a system for diagnosing a defect using a model based on continual learning according to an exemplary embodiment of the present invention will be described. FIG. 1 is a view illustrating a configuration of the system for diagnosing the defect using the model based on continual learning according to the exemplary embodiment of the present invention. FIG. 2 is a view illustrating a configuration of a device for diagnosing a defect using the model based on continual learning according to the exemplary embodiment of the present invention. FIG. 3 is a view illustrating a training data set and a model according to training rounds in continual learning according to the exemplary embodiment of the present invention.
Referring to FIG. 1, according to the exemplary embodiment of the present invention, the system for diagnosing the defect using the model based on continual learning includes a radiographic device RTA, a scanner SC, a testing device 10, and a storage device 20.
The radiographic device RTA is for performing radiography of a target object to which an image quality indicator (IQI) is attached, so as to derive a radiographic test film in which the target object attached with the image quality indicator is radiographed. Here, the target object may be exemplified as a pipe, tube, or the like.
The scanner SC is for scanning a radiographic test film so as to generate a digitized radiographic image. As such, when the digitized radiographic image is generated, the generated radiographic image is input into the testing device 10. In this case, the radiographic image may be input directly from the scanner SC or may be stored in another storage medium and then be input from the corresponding storage medium.

The testing device 10 is provided to train a current model using a current training data set and a buffer training data set previously stored in a buffer BF according to continual learning, and detect a defect in the radiographic image using the current model, which is the latest model among the models trained by continual learning. In addition, the testing device 10 may output a report including the radiographic image showing the defect detected through a bounding box BB.

The storage device 40 may be a cloud server or a database server. The buffer BF of the storage device 40 is for storing data, and the buffer training data set according to the exemplary embodiment of the present invention may be stored in the buffer BF. Here, the buffer training data set is training data selected according to the degree of influence on the prediction performance of the current model from among the past training data set used for training during past training rounds in continual learning. Meanwhile, the buffer BF has been described as a storage medium included in the storage device 40, but according to another exemplary embodiment of the present invention, the buffer BF may be a storage medium included in the testing device 10.

Referring to FIG. 2, the testing device 10 includes a collection unit 100, a training unit 200, a switching unit 300, an update unit 400, and a detection unit 500.

The collection unit 100 is for creating a current training data set by continually collecting training data, more specifically data points, for continual learning. When having created the current training data set by continually collecting training data (data point), the collection unit 100 provides the created current training data set to the training unit 200.

The training unit 200 is for generating a model through learning (i.e., Deep Learning or Machine Learning). The model according to the exemplary embodiment of the present invention is for detecting a trained object from an image. More specifically, the model according to the exemplary embodiment of the present invention detects the trained object, i.e., the defect, from the radiographic image. In this case, the model may detect a region occupied by the defect in the radiographic image through the bounding box BB. Examples of such a model may include Convolutional Neural Network (CNN), You Only Look Once (YOLO), Region-based Convolutional Neural Network (RCNN), Faster RCNN, etc. The model includes a plurality of layers (or modules) connected to each other, and the plurality of layers (or modules) is configured to perform a plurality of calculations. In addition, the plurality of layers (or modules) is connected to each other by weights. That is, an output of a calculation result of any one layer (or module) is applied with a weight and used as an input for the calculation of the next layer thereof. The model derives an output by performing the plurality of calculations applied with weights between the plurality of layers (or modules) on input data. In other words, the model performs the plurality of calculations linked by the weights between the plurality of layers (or modules). The plurality of calculations linked by the weights between the plurality of layers (or modules) of a model is referred to as "weight calculations".

In particular, the training unit 200 according to the exemplary embodiment of the present invention trains a model through continual learning.

Referring to FIG. 3, in the exemplary embodiment of the present invention, continual learning refers to a method in which new training data is continually collected, the continually collected training data is divided into training rounds so as to create a training data set including data points, and then a model is continually trained using the training data set for each training round. In the exemplary embodiment of the present invention, the training rounds may be distinguished according to at least one of time, the number of training data collected, and specific events. Accordingly, since the embodiment of the present invention continually performs training for each training round using the training data set including the data points distinguished according to each training round, the model is continually updated, and a model different from a model obtained from a previous training round is continually generated.

In the exemplary embodiment of the present invention, when a reference time point is defined as a current training round t, a model trained in the current training round t is referred to as a current model. In addition, a training data set for training the current model is referred to as a current training data set. The current training data set includes data points collected from a first past training round t-1, which is a previous training round before the current training round t, to the current training round t.

In addition, a model trained in the first past training round t-1, which is the previous training round of the current model, is referred to as a first past model. In addition, a training data set for training the first past model is referred to as a first past training data set. The first past training data set includes data points collected from a second past training round t-2, which is a previous training round before the first past training round t-1, to the first past training round t-1.

In addition, based on the current training round t, models of all previous training rounds (t-1, t-2, ...) are referred to as past models. In addition, the training data sets of all the previous training rounds (t-1, t-2, ...) relative to the current training round t are referred to as past training data sets.

Meanwhile, a model to be trained in a future training round t+1, which is a next training round of the current model, is referred to as a future model. A training data set for training the future model is referred to as a future training data set. The future training data set includes data points collected from the current training round t to the future training round t+1.

Referring back to FIG. 2, the switching unit 300 is for determining a time point and whether updating a buffer training data set according to the exemplary embodiment of the present invention is required.

The switching unit 300 derives a degree of change from models trained in at least two previous training rounds of the current model in the continual learning to the current model. To this end, the switching unit 300 derives a first gradient vector representing a change between a weight vector of the current model and a weight vector of the first past model trained in the previous training round of the current model. Next, the switching unit 300 derives a second gradient vector representing a change between the weight vector of the first past model and a weight vector of a second past model trained in the previous training round of the first past model. Then, the switching unit 300 derives a degree of change according to a degree of similarity between the first gradient vector and the second gradient vector. Next, the switching unit 300 determines whether the degree of change is greater than or equal to a reference value. That is, the switching unit 300 may determine that the degree of change is greater than or equal to the reference value when the degree of similarity between the first gradient vector and the second gradient vector is less than the reference value, and may determine that the degree of change is greater than or equal to the reference value when the degree of similarity is greater than or equal to the reference value. As a result of such determination, the switching unit 300 determines an update to the buffer training data set when the degree of change is greater than or equal to the reference value (i.e., the degree of similarity is less than the reference value). In contrast, the switching unit 300 deletes the current training data set when the degree of change is less than the reference value (i.e., the degree of similarity is greater than or equal to the reference value) .

The update unit 400 calculates a degree of influence of each of data points in a current training data set on prediction performance of a future model. That is, when the future model, which is a model of a next training round of a current model in continual learning, is trained using the current training data set, the update unit 400 calculates the degree of influence of each of the data points in the current training data set on the prediction performance of the future model. In addition, the update unit 400 updates a buffer training data set by selecting a predefined number of data points in the current training data set in order of higher to lower degrees of influence that is calculated. In this case, the update unit 400 deletes buffer training data previously stored in the buffer BF and stores data points selected in the order of higher to lower degrees of influence among the data points in the buffer, thereby updating the buffer training data set. In addition, the update unit 400 deletes the remaining data points not selected in the order of higher to lower degrees of influence among the data points.

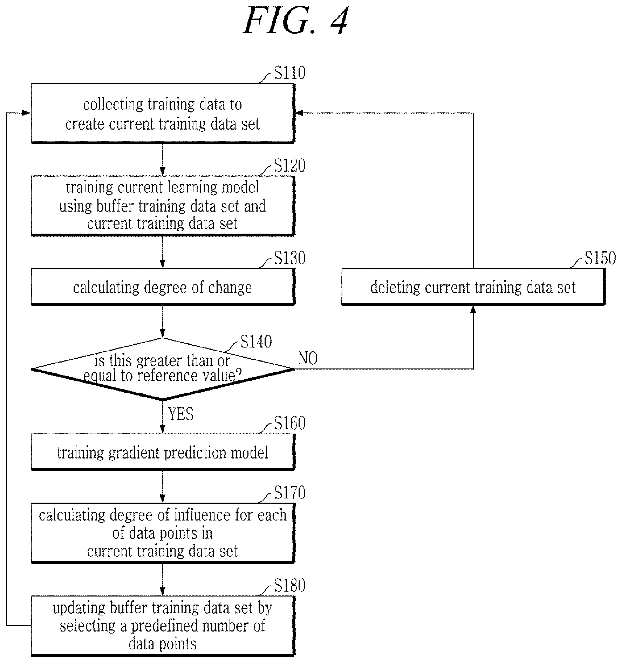

Next, a method for selecting training data for continual learning according to the exemplary embodiment of the present invention will be described. FIG. 4 is a view illustrating a method for selecting training data for continual learning according to the exemplary embodiment of the present invention.

Referring to FIG. 4, in step S110, a collection unit 100 creates a current training data set by continually collecting data points.

In step S120, a training unit 200 loads a buffer training data set previously stored in a buffer BF, and then generates a current model through training using the buffer training data set, which is previously stored in the buffer BF, and the current training data set. Here, the buffer training data set, previously stored in the buffer BF, is data points selected according to a degree of influence on prediction performance of the current model from among a past training data set used for training during past training rounds in continual learning.

In step S130, a switching unit 300 derives a degree of change from models trained in at least two previous training rounds of the current model in the continual learning to the current model. More specifically, such step S130 is described as follows.

First, the switching unit 300 derives a first gradient vector representing a change between a weight vector of the current model and a weight vector of a first past model trained in a previous training round of the current model.

Next, the switching unit 300 derives a second gradient vector representing a change between the weight vector of the first past model and a weight vector of a second past model trained in a previous training round of the first past model. Then, the switching unit 300 derives the degree of change according to a degree of similarity between the first gradient vector and the second gradient vector.

In this case, the switching unit 300 may calculate the degree of similarity according to the following Equation 1.

[Equation 1]

$$CS = \frac{g_{t-1}^{T} g_t}{\|g_{t-1}\|_2 \|g_t\|_2}$$

where, CS denotes the degree of similarity. $g_t$ denotes the first gradient vector between the weight vector of the current model and the weight vector of the first past model. In addition, $g_{t-1}$ denotes the second gradient vector between the weight vector of the first past model and the weight vector of the second past model. In addition, $g_{t-1}^{T}$ denotes a transpose vector of the second gradient vector.

Next, in step S140, the switching unit 300 determines whether the degree of change is greater than or equal to a reference value. In this case, according to Equation 1, the switching unit 300 determines that the degree of change is greater than or equal to the reference value when the degree of similarity between the first gradient vector and the second gradient vector is less than the reference value. In contrast, according to Equation 1, the switching unit 300 determines that the degree of change is less than the reference value when the degree of similarity between the first gradient vector and the second gradient vector is greater than or equal to the reference value.

When a result of determination in step S140 is that the degree of change is greater than or equal to the reference value (i.e., the degree of similarity is less than the reference value), the switching unit 300 proceeds to step S150, deletes the current training data set, and iteratively performs steps S110 to S140 described above.

In contrast, when a determination result in step S140 is that the degree of change is less than the reference value (i.e., the degree of similarity is greater than or equal to the reference value), the switching unit 300 proceeds to step S160 after determining an update to the buffer training data set.

In step S160, the training unit 200 trains a gradient prediction model (GPM). The gradient prediction model (GPM) is for generating derived training data from the training data (data points) used to train the current model and using the generated derived training data to predict a gradient vector of a future model. The training of the gradient prediction model (GPM) is described in more detail below.

Next, in step S170, an update unit 400 calculates the degree of influence of each of data points in the current training data set on the prediction performance of the future model. Specifically, when the future model, which is the model of the next training round of the current model in continual learning, is trained using the current training data set, the update unit 400 calculates the degree of influence of each of the data points in the current training data set on the prediction performance of the future model. The procedure for calculating such a degree of influence is described in more detail below.

Next, in step S180, the update unit 400 updates the buffer training data set by selecting a predefined number of the data points in the current training data set in order of higher to lower degrees of influence. In this case, the update unit 400 deletes the buffer training data previously stored in the buffer BF and stores training data selected in the order of higher to lower degrees of influence from among the data points in the buffer BF, thereby updating the buffer training data set. In addition, in step S180, the update unit 400 deletes the remaining training data not selected in the order of higher to lower degrees of influence from among the data points.

In the same manner as described above, the buffer training data set is updated, and through this way, continual learning is applied to the model using a new training data set together with the buffer training data set, so as to maximally reduce a storage space while overcoming catastrophic forgetting, whereby the model for providing high accuracy at minimal cost may be continuously provided.

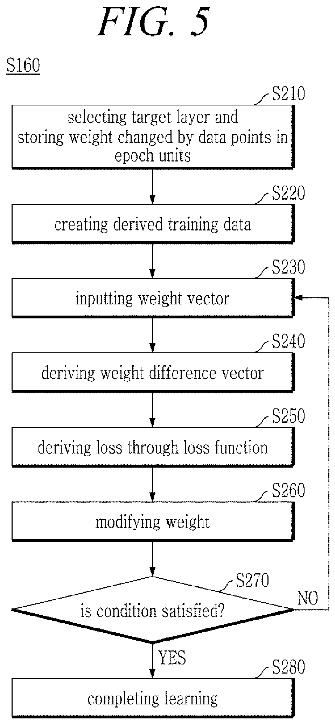

Next, a method for training a gradient prediction model (GPM) according to the exemplary embodiment of the present invention will be described. FIG. 5 is a flowchart illustrating a method for training a gradient prediction model according to the exemplary embodiment of the present invention. To emphasize, FIG. 5 is a view illustrating details of step S160 in FIG. 4.

Referring to FIG. 5, in step S210, the training unit 200 has selected a target layer of the current model. For example, the target layer may be a convolutional layer of CNN. In addition, while training the current model in step S120, the training unit 200 trains the current model using the current training data set by dividing them into epochs, and in step S210, the training unit 200 stores a modified weight vector of the target layer of the current model each time the current model is trained using an epoch of the current training data set.

Accordingly, in step S220, the training unit 200 creates a derived training data, which is training data derived from the current training data set.

Derived training data includes: a modified weight vector for a target layer of the current model each time the current model is iteratively trained by dividing the current training data set into epoch units; and a target gradient vector representing a difference between a weight vector of a current epoch and a weight vector of a previous epoch each time the current model is iteratively trained by dividing the current training data set into epoch units.

Each time a model is iteratively trained using the current training data set divided into epoch units, the modified weight vector of the target layer changes as shown in the following Equation 2.

[Equation 2]

$$W(n+1) = W(n) + LR \times G(n)$$

wherein, n denotes an index of each epoch. LR denotes a learning rate. In addition, G(n) denotes a gradient vector. The embodiment of the present invention approximates, as the gradient vector, the product of the learning rate LR and the gradient vector G(n). Accordingly, a weight vector may be expressed as [W(1), W(2), W (3), ... , W(E - 1)] (where E is any positive constant). In addition, a target gradient vector corresponding to [W(1), W(2), W(3), ... , W(E - 1)] may be expressed as [W(2) - W(1), W(3) - W(2), W(4) - W(3), ... , W(E) - W(E - 1)].

Next, in step S230, the training unit 200 inputs the weight vector of the derived training data into the gradient prediction model (GPM) having a weight that has not been trained. Then, in step S240, the gradient prediction model (GPM) performs a weight calculation in which the weight that has not been trained is applied to a training radiographic image, so as to derive a weight difference vector that predicts a difference between a weight vector based on a previous epoch and a weight vector of a target layer based on a current epoch.

Next, in step S250, the training unit 200 calculates, through a loss function, a loss representing a difference between the target gradient vector and the weight difference vector. Then, in step S260, the training unit 200 performs optimization so as to modify the weight of the gradient prediction model (GPM), whereby the loss derived through the loss function is maximally reduced.

Then, in step S270, the training unit 200 determines whether a training completion condition is satisfied. According to the exemplary embodiment, the training completion condition may be for a case where the loss calculated previously in step S250 converges to be less than or equal to a preset target value. When such a determination result in step S270 does not satisfy the training completion condition, steps S230 to S270 described above are iteratively performed using data points different from each other. In contrast, in step S280, the training unit 200 completes the training for the gradient prediction model (GPM) when the determination result in step S270 satisfies the training completion condition.

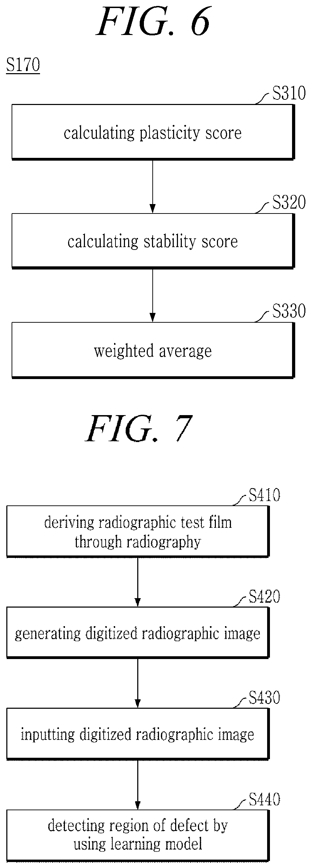

Next, according to the exemplary embodiment of the present invention, a method for calculating a degree of influence of each of the data points in a current training data set on prediction performance of a future model will be described. FIG. 6 is a flowchart illustrating a method for calculating a degree of influence of training data on prediction performance of a future model according to the exemplary embodiment of the present invention. That is, FIG. 6 is a view illustrating details of step S170 in FIG. 4.

In step S310, the update unit 400 calculates a plasticity score representing a probability that a prediction value of the current model and a prediction value of the future model are different from each other for the current training data set.

In this case, the update unit 400 may calculate the plasticity score based on the following Equation 3.

[Equation 3]

$$p(\hat{y}^{t+1} \neq \hat{y}^t \mid x^t) = 1 - p(\hat{y}_n^{t+1} \mid \hat{y}_n^t, x_n^t)$$

wherein, $p(\hat{y}^{t+1} \neq \hat{y}^t \mid x^t)$ denotes a conditional probability representing the plasticity score. n denotes an index of data points in the current training data set. t denotes an index of a model, t denotes an index of a training round in continual learning, t denotes a current training round, and t-1 denotes a first past training round. $x_n^t$ denotes the data points in the current training data set. In addition, $\hat{y}_n^{t+1}$ denotes a prediction value of the future model, and $\hat{y}_n^t$ denotes a prediction value of the current model.

Meanwhile, since the prediction value of the future model is obtained before the future model is generated, this prediction value is estimated using a predicted gradient of the future model while applying the gradient prediction model (GPM) thereto. Accordingly, the prediction value of the future model in Equation 3 is estimated according to the following Equation 4.

[Equation 4]

$$p(\hat{y}_n^{t+1} \mid x_n^t) = f(GP(\theta^t), x_n^t)$$

wherein, $x_n^t$ denotes the data points in the current training data set. In addition, $\hat{y}_n^{t+1}$ denotes a prediction value of the future model, and $GP(\theta^t)$ denotes a gradient vector predicted by the gradient prediction model (GPM) for the future model.

Next, in step S320, the update unit 400 calculates a stability score representing a probability that the prediction value of the current model is different from the prediction value of the first past model trained in the previous training round of the current model for the data points in the current training data set.

In this case, the update unit 400 may calculate the stability score according to the following Equation 5.

[Equation 5]

$$p(\hat{y}^{t-1} \neq \hat{y}^{t} \mid x^{t}) = 1 - p(\hat{y}_{n}^{t-1} \mid \hat{y}_{n}, x_{n}^{t})$$

wherein, $p(\hat{y}^{t-1} \neq \hat{y}^{t} \mid x^{t})$ denotes a conditional probability representing the stability score.

n denotes an index of the data points in the current training data set. In addition, t denotes an index of a training round in continual learning, t denotes the current training round, and t-1 indicates the first past training round. $x_{n}^{t}$ denotes the data points in the current training data set. In addition, $\hat{y}_{n}^{t-1}$ denotes the prediction value of the first past model, and $\hat{y}_{n}^{t}$ denotes the prediction value of the current model.

Next, in step S330, the update unit 400 calculates, as the degree of influence, a weighted average of the plasticity score and the stability score.

In this case, the update unit 400 calculates the degree of influence according to the following Equation 6.

[Equation 6]

$$S_{i} = \lambda \cdot \text{Plasticity}_{i} + (1 - \lambda) \cdot \text{Stability}_{i}$$

wherein, S denotes the degree of influence. i denotes an index of the data points in the current training data set. $\lambda$ denotes a preset weight. Plasticity denotes the plasticity score, and Stability denotes the stability score.

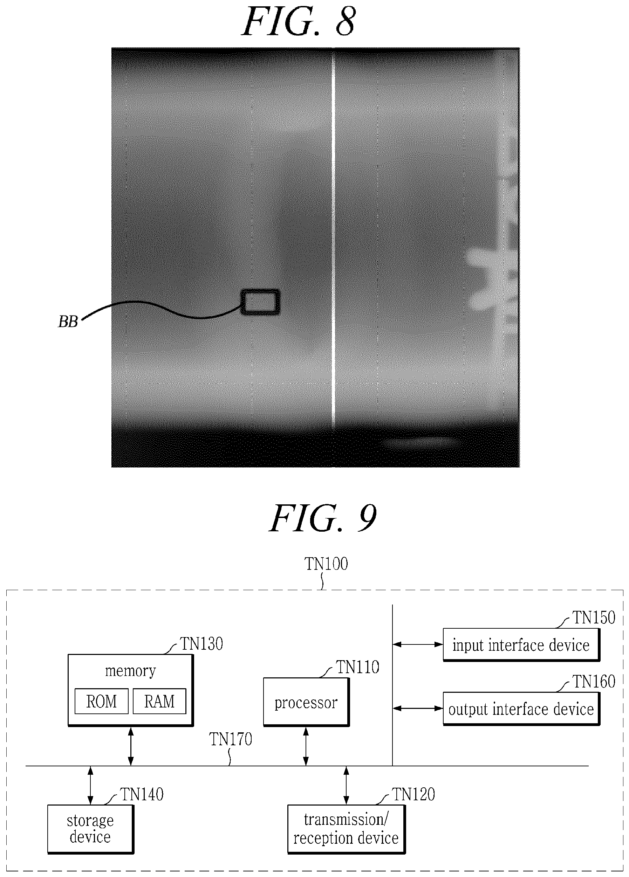

Next, a method for diagnosing a defect using a model based on continual learning according to the exemplary embodiment of the present invention will be described. FIG. 7 is a flowchart illustrating a method for diagnosing a defect using a model based on continual learning according to the exemplary embodiment of the present invention. FIG. 8 is an example screen for illustrating the method for diagnosing the defect using the model based on continual learning according to the exemplary embodiment of the present invention.

In FIG. 7, as described above in step S120, a model is a current model trained using a previously stored buffer training data set and a current training data set.

Referring to FIG. 7, in step S410, a radiographic device RTA is used to perform radiography of a target object to which an image quality indicator (IQI) is attached, so as to derive a radiographic test film in which the target object attached with the image quality indicator is radiographed. Here, the target object may be exemplified as a pipe, tube, or the like.

Then, in step S420, the scanner SC scans the radiographic test film so as to generate a digitized radiographic image. As such, when the digitized radiographic image is generated, the generated radiographic image is input into a testing device 10. In this case, the radiographic image may be input directly from a scanner 30 or may be stored in another storage medium and then be input from the corresponding storage medium.

In step S430, a detection unit 500 of the testing device 10 receives the radiographic image. Then, in step S440, the detection unit 500 detects a defect in the radiographic image using the latest model, i.e., a current model, among models trained through continual learning as described above. In this case, as shown in FIG. 8, the current model may detect a region occupied by the defect in the radiographic image through a bounding box BB.

Next, in step S450, the detection unit 500 outputs a report including the radiographic image showing the defect detected through the bounding box BB.

FIG. 9 is a view illustrating a computing device according to the exemplary embodiment of the present invention. A computing device TN100 in FIG. 9 may be a device described herein (e.g., a testing device 10, a storage device 40, and the like).

In the exemplary embodiment of FIG. 9, the computing device TN100 may include at least one processor TN110, a transmission/reception device TN120, and a memory TN130. In addition, the computing device TN100 may further include a storage device TN140, an input interface device TN150, an output interface device TN160, etc. Components included in the computing device TN100 and connected to each other by a bus TN170 may communicate with each other.

The processor TN110 may execute a program command stored in at least one among the memory TN130 and the storage device TN140. The processor TN110 may refer to a hardware central processing unit (CPU), a hardware graphics processing unit (GPU), or a dedicated processing circuit on which methods according to the exemplary embodiment of the present invention are performed. The processor TN110 may be configured to implement procedures, functions, methods, and the like described in connection with the exemplary embodiment of the present invention. The processor TN110 may control each component of the computing device TN100.

Each of the memory TN130 and the storage device TN140 may store various information related to the operation of the processor TN110. Each of the memory TN130 and the storage device TN140 may be composed of at least one among a volatile storage medium and a non-volatile storage medium. For example, the memory TN130 may be composed of at least one of Solid-State Drive (SSD), read only memory (ROM) and random access memory (RAM).

The transmission/reception device TN120 may transmit or receive wired signals or wireless signals, such as signals over Ethernet (LAN) or fiber-optic cables (WAN), or wireless signals, such as Wi-Fi, Bluetooth, or cellular signals. The transmission/reception device TN120 may be connected to a network and perform communication.

In particular, each of the collection unit 100, training unit 200, switching unit 300, update unit 400, and detection unit 500 of the testing device 10 according to the exemplary embodiment of the present invention may be implemented in the form of a program readable by a computer means, and may be stored in the memory TN130 and then executed in the processor TN110. Alternatively, the collection unit 100, training unit 200, switching unit 300, update unit 400, and detection unit 500 may be sub-modules of the processor TN110.

In addition, the buffer BF according to the exemplary embodiment of the present invention may be the memory TN130 or the storage device TN140 of the testing device 10 or the storage device 40.

Meanwhile, various methods according to the exemplary embodiment of the present invention described above may be implemented in the form of programs readable through various computer means and be recorded on a non-transitory computer-readable recording media. Here, the recording media may store program commands, data files, data structures, etc., singly or in combination thereof. The program commands recorded on the recording media may be designed and configured specifically for the embodiment of the present invention or may be publicly known and available to those skilled in the art of computer software. For example, the recording media include: magnetic media such as hard disks, floppy disks, and magnetic tapes; optical media such as CD-ROMs and DVDs; magneto-optical media such as floptical disks; and a hardware device specially configured to store and execute program commands, the hardware device including such as ROM, RAM, flash memory, etc. Examples of the computer commands include not only machine language generated by a compiler, but also high-level language wires executable by a computer using an interpreter or the like. Such a hardware device described above may be configured to operate using one or more software modules in order to perform the operation of the embodiment of the present invention, and vice versa.

Although the exemplary embodiment of the present invention has been described above, those skilled in the art will be able to modify and change the present invention in various ways by attaching, changing, deleting, or adding components.

**Claims**

1. A method for diagnosing a defect, the method comprising:

    training (S120), by a training unit (200), a current model using a buffer training data set previously stored in a buffer and a current training data set;
    calculating (S130), by a switching unit (300), after the training of the current model, a degree of change from models trained in at least two previous training rounds of the current model in the continual learning to the current model;
    determining (S140), by the switching unit (300), whether the degree of change is greater than or equal to a reference value;
    determining (S150), by the switching unit (300), an update to the buffer training data set when the degree of change is greater than or equal to the reference value;
    calculating (S170), by an update unit (400), a degree of influence of each of data points in the current training data set on prediction performance of a future model when the future model to be trained in a next training round of the current model is trained using the current training data set in the continual learning;
    updating (S180), by the update unit (400), the buffer training data set by selecting a predefined number of the data points in order of higher to lower degrees of influence; and
    detecting (S440), by a detection unit (500), the defect in a radiographic image using the current model when the radiographic image is input,
    wherein the calculating of the degree of influence is performed according to Equation

$$S_i = \lambda \cdot \text{Plasticity}_i + (1 - \lambda) \cdot \text{Stability}_i,$$

wherein S denotes the degree of influence,

i denotes an index of the data points in the current training data set,

λ denotes a weight,

Plasticity denotes a plasticity score, and

Stability denotes a stability score.

2. The method of claim 1, wherein the training of the current model (S120) comprises:

loading, by the training unit, the buffer training data set, which is training data selected according to a degree of influence on prediction performance of the current model from among a past training data set in continual learning; and

training the current model using the buffer training data set and the current training data set.

3. The method of claim 1, wherein the calculating of the degree of influence (S170) comprises:

calculating (S310), by the update unit (400), a plasticity score representing a first probability that a first prediction value of the current model and a second prediction value of the future model are different from each other for the data points in the current training data set;

calculating (S320), by the update unit (400), a stability score representing a second probability that the first prediction value of the current model and a third prediction value of a first past model trained in a previous training round of the current model, are different from each other for the data points in the current training data set; and

determining (S330), by the update unit (400), a weighted average of the plasticity score and the stability score as the degree of influence.

4. The method of claim 1, wherein calculating a stability score (S320) is performed according to Equation

$$p(\hat{y}^{t-1} \neq \hat{y}^{t} \mid x^{t}) = 1 - p(\hat{y}_{n}^{t-1} \mid \hat{y}_{n}^{t}, x_{n}^{t}),$$

wherein $p(\hat{y}^{t-1} \neq \hat{y}^{t} \mid x^{t})$ denotes the stability score, $x_{n}^{t}$ denotes the data points in the current training data set,

$\hat{y}_{n}^{t-1}$ denotes a first prediction value of a first past model, and

$\hat{y}_{n}^{t}$ denotes a second prediction value of the current model.

5. The method of claim 1, wherein calculating a plasticity score (S310) is performed according to Equation

$$p(\hat{y}^{t+1} \neq \hat{y}^{t} \mid x^{t}) = 1 - p(\hat{y}_{n}^{t+1} \mid \hat{y}_{n}^{t}, x_{n}^{t}),$$

wherein $p(\hat{y}^{t+1} \neq \hat{y}^{t} \mid x^{t})$ denotes the plasticity score,

$x_{n}^{t}$ denotes the data points in the current training data set,

$\hat{y}_{n}^{t+1}$ denotes a first prediction value of the future model, and

$\hat{y}_{n}^{t}$ denotes a second prediction value of the current model.

6. The method of claim 5, wherein the calculating of the plasticity score (S310) derives the prediction value of the future model according to Equation

$$p(\hat{y}^{t+1} \mid x^{t}) = f(GP(\theta^{t}), x),$$

wherein $\hat{y}_n^{t+1}$ denotes the first prediction value of the future model,

*x* denotes the data points in the current training data set, and

$GP(\theta^t)$ denotes a gradient vector predicted by the future model through a gradient prediction model.

7. The method of claim **1,** wherein the calculating of the degree of change (S130) derives the degree of change according to a degree of similarity between:

a first gradient vector representing a first change between a first weight vector of the current model and a second weight vector of a first past model trained in the previous training round of the current model, and
a second gradient vector representing a second change between the second weight vector of the first past model and a third weight vector of a second past model trained in a previous training round of the first past model.

8. The method of claim 7, wherein the degree of similarity is calculated according to Equation

$$CS = \frac{g_{t-1}^T g_t}{\|g_{t-1}\|_2 \|g_t\|_2},$$

wherein CS denotes the degree of similarity,

$g_t$ denotes the first gradient vector between the first weight vector of the current model and the second weight vector of the first past model,

$g_{t-1}$ denotes the second gradient vector between the second weight vector of the first past model and the third weight vector of the second past model, and

$g_{t-1}^T$ denotes a transpose vector of the second gradient vector.

9. A device (10) for diagnosing a defect, the device comprising:

a training unit (200) configured to train a current model using a buffer training data set previously stored in a buffer and a current training data set;
a switching unit (300) configured to:

calculate a degree of change from models trained in at least two previous training rounds of the current model in the continual learning to the current model;
determine whether the degree of change is greater than or equal to a reference value; and
determine an update to the buffer training data set when the degree of change is greater than or equal to the reference value;
an update unit (400) configured to:

calculate a degree of influence of each of data points in the current training data set on prediction performance of a future model when the future model to be trained in a next training round of the current model is trained using the current training data set in the continual learning; and
update the buffer training data set by selecting a predefined number of the data points in order of higher to lower degrees of influence; and
a detection unit (500) configured to detect the defect in a radiographic image using the current model when the radiographic image is input;
wherein the update unit is configured to calculate the degree of influence according to Equation

$$S_i = \lambda \cdot \text{Plasticity}_i + (1 - \lambda) \cdot \text{Stability}_i,$$

wherein S denotes the degree of influence,
i denotes an index of the data points in the current training data set,
$\lambda$ denotes a weight,

Plasticity denotes a plasticity score, and
Stability denotes a stability score.

10. The device (10) of claim 9, wherein the training unit (200) loads the buffer training data set, which is training data selected according to a degree of influence on prediction performance of the current model from among a past training data set in continual learning, and trains the current model using the buffer training data set and the current training data set.

11. The device (10) of claim 9, wherein the update unit (400) calculates a plasticity score representing a first probability that a first prediction value of the current model and a second prediction value of the future model are different from each other for the data points in the current training data set, calculates a stability score representing a second probability that the first prediction value of the current model and a third prediction value of a first past model trained in a previous training round of the current model, are different from each other for the data points in the current training data set, and determines a weighted average of the plasticity score and the stability score as the degree of influence.

12. The device (10) of claim 9, wherein the update unit (400) calculates a stability score according to

Equation

$$p(\hat{y}^{t-1} \neq \hat{y}^t \mid x^t) = 1 - p(\hat{y}_n^{t-1} \mid \hat{y}_n^t, x_n^t),$$

wherein $p(\hat{y}^{t-1} \neq \hat{y}^t \mid x^t)$ denotes the stability score,

$x_n^t$ denotes the data points in the current training data set,

$\hat{y}_n^{t-1}$ denotes a first prediction value of a first past model, and

$\hat{y}_n^t$ denotes a second prediction value of the current model.

**Patentansprüche**

1. Verfahren zur Defektdiagnose, wobei das Verfahren umfasst:

Trainieren (S120), durch eine Trainingseinheit (200), eines aktuellen Modells unter Verwendung eines zuvor in einem Puffer gespeicherten Puffer-Trainingsdatensatzes und eines aktuellen Trainingsdatensatzes;
Berechnen (S130), durch eine Schalteinheit (300), nach dem Trainieren des aktuellen Modells, eines Änderungsgrads von Modellen, die in zumindest zwei vorherigen Trainingsrunden des aktuellen Modells im Rahmen des kontinuierlichen Lernens trainiert wurden, zum aktuellen Modell;
Bestimmen (S140), durch die Schalteinheit (300), ob der Änderungsgrad größer oder gleich einem Referenzwert ist;
Bestimmen (S150), durch die Schalteinheit (300), einer Aktualisierung des Puffer-Trainingsdatensatzes, wenn der Änderungsgrad größer oder gleich dem Referenzwert ist;
Berechnen (S170), durch eine Aktualisierungseinheit (400), eines Einflussgrads jedes Datenpunkts in dem aktuellen Trainingsdatensatz auf die Vorhersageleistung eines zukünftigen Modells, wenn das zukünftige Modell, das in einer nächsten Trainingsrunde des aktuellen Modells trainiert wird, unter Verwendung des aktuellen Trainingsdatensatzes im Rahmen des kontinuierlichen Lernens trainiert wird;
Aktualisieren (S180), durch die Aktualisierungseinheit (400), des Puffer-Trainingsdatensatzes durch Auswählen einer vordefinierten Anzahl der Datenpunkte in der Reihenfolge vom höherem zum niedrigeren Einflussgrad; und
Erkennen (S440), durch eine Erkennungseinheit (500), des Defekts in einem Röntgenbild unter Verwendung des aktuellen Modells, wenn das Röntgenbild eingegeben wird,
wobei das Berechnen des Einflussgrads gemäß folgender Gleichung ausgeführt wird:

$$S_i = \lambda \cdot \text{Plasticity}_i + (1 - \lambda) \cdot \text{Stability}_i,$$

wobei S den Einflussgrad bezeichnet,
i einen Index der Datenpunkte in dem aktuellen Trainingsdatensatz bezeichnet, λ ein Gewicht bezeichnet,
Plasticity einen Plastizitätswert bezeichnet, und
Stability einen Stabilitätswert bezeichnet.

2. Verfahren nach Anspruch 1, wobei das Trainieren des aktuellen Modells (S120) umfasst:

Laden, durch die Trainingseinheit, des Puffer-Trainingsdatensatzes, wobei es sich um Trainingsdaten handelt, die entsprechend einem Einflussgrad auf die Vorhersageleistung des aktuellen Modells aus einem früheren Trainingsdatensatz im Rahmen des kontinuierlichen Lernens ausgewählt wurden; und
Trainieren des aktuellen Modells unter Verwendung des Puffer-Trainingsdatensatzes und des aktuellen Trainingsdatensatzes.

3. Verfahren nach Anspruch 1, wobei das Berechnen des Einflussgrads (S170) umfasst:

Berechnen (S310), durch die Aktualisierungseinheit (400), eines Plastizitätswerts, der eine erste Wahrscheinlichkeit repräsentiert, dass sich ein erster Vorhersagewert des aktuellen Modells und ein zweiter Vorhersagewert des zukünftigen Modells für die Datenpunkte in dem aktuellen Trainingsdatensatz voneinander unterscheiden;
Berechnen (S320), durch die Aktualisierungseinheit (400), eines Stabilitätswerts, der eine zweite Wahrscheinlichkeit repräsentiert, dass sich der erste Vorhersagewert des aktuellen Modells und ein dritter Vorhersagewert eines ersten früheren Modells, das in einer vorherigen Trainingsrunde des aktuellen Modells trainiert wurde, für die Datenpunkte in dem aktuellen Trainingsdatensatz voneinander unterscheiden; und
Bestimmen (S330), durch die Aktualisierungseinheit (400), eines gewichteten Mittelwerts des Plastizitätswerts und des Stabilitätswerts als Einflussgrad.

4. Verfahren nach Anspruch 1, wobei das Berechnen eines Stabilitätswerts (S320) gemäß folgender Gleichung ausgeführt wird:

$$p(\hat{y}^{t-1} \neq \hat{y}^t \mid x^t) = 1 - p(\hat{y}_n^{t-1} \mid \hat{y}_n^t, x_n^t),$$

wobei $p(\hat{y}^{t-1} \neq \hat{y}^t \mid x^t)$ den Stabilitätswert bezeichnet,

$x_n^t$ die Datenpunkte in dem aktuellen Trainingsdatensatz bezeichnet,

$\hat{y}_n^{t-1}$ einen ersten Vorhersagewert eines ersten früheren Modells bezeichnet, und

$\hat{y}_n^t$ einen zweiten Vorhersagewert des aktuellen Modells bezeichnet.

5. Verfahren nach Anspruch 1, wobei das Berechnen eines Plastizitätswerts (S310) gemäß folgender Gleichung ausgeführt wird:

$$p(\hat{y}^{t+1} \neq \hat{y}^t \mid x^t) = 1 - p(\hat{y}_n^{t+1} \mid \hat{y}_n^t, x_n^t),$$

wobei $p(\hat{y}^{t+1} \neq \hat{y}^t \mid x^t)$ den Plastizitätswert bezeichnet,

$x_n^t$ die Datenpunkte in dem aktuellen Trainingsdatensatz bezeichnet,

$\hat{y}_n^{t+1}$ einen ersten Vorhersagewert des zukünftigen Modells bezeichnet, und

$\hat{y}_n^t$ einen zweiten Vorhersagewert des aktuellen Modells bezeichnet.

6. Verfahren nach Anspruch 5, wobei das Berechnen des Plastizitätswerts (S310) den Vorhersagewert des zukünftigen Modells gemäß folgender Gleichung ableitet:

$$p(\hat{y}^{t+1} \mid x^t) = f(GP(\theta^t), x)$$,

wobei $\hat{y}_n^{t+1}$ den ersten Vorhersagewert des zukünftigen Modells bezeichnet,

$x$ die Datenpunkte in dem aktuellen Trainingsdatensatz bezeichnet, und

$GP(\theta^t)$ einen Gradientenvektor bezeichnet, der von dem zukünftigen Modell mittels eines Gradienten-Vorhersagemodells vorhergesagt wird.

7. Verfahren nach Anspruch 1, wobei das Berechnen des Änderungsgrads (S130) den Änderungsgrad entsprechend einem Ähnlichkeitsgrad ableitet zwischen:

einem ersten Gradientenvektor, der eine erste Änderung zwischen einem ersten Gewichtsvektor des aktuellen Modells und einem zweiten Gewichtsvektor eines ersten früheren Modells, das in der vorherigen Trainingsrunde des aktuellen Modells trainiert wurde, repräsentiert, und

einem zweiten Gradientenvektor, der eine zweite Änderung zwischen dem zweiten Gewichtsvektor des ersten früheren Modells und einem dritten Gewichtsvektor eines zweiten früheren Modells repräsentiert, das in einer vorherigen Trainingsrunde des ersten früheren Modells trainiert wurde.

8. Verfahren nach Anspruch 7, wobei der Ähnlichkeitsgrad gemäß der folgender Gleichung berechnet wird:

$$CS = \frac{g_{t-1}^T \, g_t}{\|g_{t-1}\|_2 \|g_t\|_2}$$,

wobei CS den Ähnlichkeitsgrad bezeichnet,

$g_t$ den ersten Gradientenvektor zwischen dem ersten Gewichtsvektor des aktuellen Modells und dem zweiten Gewichtsvektor des ersten früheren Modells bezeichnet,

$g_{t-1}$ den zweiten Gradientenvektor zwischen dem zweiten Gewichtsvektor des ersten früheren Modells und dem dritten Gewichtsvektor des zweiten früheren Modells bezeichnet, und

$g_{t-1}^T$ einen transponierten Vektor des zweiten Gradientenvektors bezeichnet.

9. Vorrichtung (10) zur Defektdiagnose, wobei die Vorrichtung umfasst:

eine Trainingseinheit (200), die so konfiguriert ist, dass sie ein aktuelles Modell unter Verwendung eines zuvor in einem Puffer gespeicherten Puffer-Trainingsdatensatzes und eines aktuellen Trainingsdatensatzes trainiert;

eine Schalteinheit (300), die konfiguriert ist zum:

Berechnen eines Änderungsgrads von Modellen, die in zumindest zwei vorherigen Trainingsrunden des aktuellen Modells im Rahmen des kontinuierlichen Lernens trainiert wurden, zum aktuellen Modell;

Bestimmen, ob der Änderungsgrad größer oder gleich einem Referenzwert ist; und

Bestimmen einer Aktualisierung des Puffer-Trainingsdatensatzes, wenn der Änderungsgrad größer oder gleich dem Referenzwert ist;

eine Aktualisierungseinheit (400), die konfiguriert ist zum:

Berechnen eines Einflussgrads jedes der Datenpunkte in dem aktuellen Trainingsdatensatz auf die Vorhersageleistung eines zukünftigen Modells, wenn das zukünftige Modell, das in einer nächsten Trainingsrunde des aktuellen Modells trainiert wird, unter Verwendung des aktuellen Trainingsdatensatzes im Rahmen des kontinuierlichen Lernens trainiert wird; und

Aktualisieren des Puffer-Trainingsdatensatzes durch Auswählen einer vordefinierten Anzahl der Datenpunkte in der Reihenfolge vom höheren zum niedrigeren Einflussgrad; und

eine Erkennungseinheit (500), die so konfiguriert ist, dass sie den Defekt in einem Röntgenbild unter Verwendung des aktuellen Modells erkennt, wenn das Röntgenbild eingegeben wird;

wobei die Aktualisierungseinheit so konfiguriert ist, dass sie den Einflussgrad gemäß folgender Gleichung berechnet:

$$S_i = \lambda \cdot \text{Plasticity}_i + (1 - \lambda) \cdot \text{Stability}_i,$$

wobei S den Einflussgrad bezeichnet,
i einen Index der Datenpunkte in dem aktuellen Trainingsdatensatz bezeichnet,
λ ein Gewicht bezeichnet,
Plasiticity einen Plastizitätswert bezeichnet, und
Stability einen Stabilitätswert bezeichnet.

10. Vorrichtung (10) nach Anspruch 9, wobei die Trainingseinheit (200) den Puffer-Trainingsdatensatz lädt, wobei es sich um Trainingsdaten handelt, die entsprechend ihrem Einflussgrad auf die Vorhersageleistung des aktuellen Modells aus einem früheren Trainingsdatensatz im Rahmen des kontinuierlichen Lernens ausgewählt wurden, und das aktuelle Modell unter Verwendung des Puffer-Trainingsdatensatzes und des aktuellen Trainingsdatensatzes trainiert.

11. Vorrichtung (10) nach Anspruch 9, wobei die Aktualisierungseinheit (400) einen Plastizitätswert berechnet, der eine erste Wahrscheinlichkeit repräsentiert, dass sich ein erster Vorhersagewert des aktuellen Modells und ein zweiter Vorhersagewert des zukünftigen Modells hinsichtlich der Datenpunkte im aktuellen Trainingsdatensatz voneinander unterscheiden, einen Stabilitätswert berechnet, der eine zweite Wahrscheinlichkeit repräsentiert, dass sich der erste Vorhersagewert des aktuellen Modells und ein dritter Vorhersagewert eines ersten früheren Modells, das in einer vorherigen Trainingsrunde des aktuellen Modells trainiert wurde, hinsichtlich der Datenpunkte im aktuellen Trainingsdatensatz voneinander unterscheiden, und einen gewichteten Mittelwert des Plastizitätswerts und des Stabilitätswerts als Einflussgrad bestimmt.

12. Vorrichtung (10) nach Anspruch 9, wobei die Aktualisierungseinheit (400) einen Stabilitätswert gemäß der folgenden Gleichung berechnet:

$$p(\hat{y}^{t-1} \neq \hat{y}^t \mid x^t) = 1 - p(\hat{y}_n^{t-1} \mid \hat{y}_n^t,\, x_n^t),$$

wobei $p(\hat{y}^{t-1} \neq \hat{y}^t \mid x^t)$ den Stabilitätswert bezeichnet,

$x_n^t$ die Datenpunkte in dem aktuellen Trainingsdatensatz bezeichnet,

$\hat{y}_n^{t-1}$ einen ersten Vorhersagewert eines ersten früheren Modells bezeichnet, und

$\hat{y}_n^t$ einen zweiten Vorhersagewert des aktuellen Modells bezeichnet.

**Revendications**

1. Procédé de diagnostic d'un défaut, ledit procédé comprenant :

l'apprentissage (S120), par une unité d'apprentissage (200), d'un modèle actuel au moyen d'un ensemble de données d'apprentissage de tampon préalablement stocké dans un tampon et d'un ensemble de données d'apprentissage actuel ;
le calcul (S130), par une unité de commutation (300), après l'apprentissage du modèle actuel, d'un degré de variation des modèles entraînés pendant au moins deux cycles d'apprentissage précédents du modèle actuel lors de l'apprentissage continu vers le modèle actuel ;
la détermination (S140), par l'unité de commutation (300), si le degré de variation est supérieur ou égal à une valeur de référence ;
la détermination (S150), par l'unité de commutation (300), d'une mise à jour de l'ensemble de données d'apprentissage de tampon si le degré de variation est supérieur ou égal à la valeur de référence ;
le calcul (S170), par une unité de mise à jour (400), d'un degré d'influence de chacun des points de données dans l'ensemble de données d'apprentissage actuel sur la performance de prédiction d'un modèle futur lorsque le modèle futur à entraîner lors d'un prochain cycle d'apprentissage du modèle actuel est entraîné au moyen de l'ensemble de données d'apprentissage actuel lors de l'apprentissage continu ;
la mise à jour (S180), par l'unité de mise à jour (400), de l'ensemble de données d'apprentissage de tampon par sélection d'un nombre prédéfini de points de données dans l'ordre des plus élevés aux plus faibles degrés d'influence ; et

la détection (S440), par une unité de détection (500), du défaut dans une image radiographique au moyen du modèle actuel lorsque l'image radiographique est entrée,

où le calcul du degré d'influence est exécuté conformément à l'équation

$$S_i = \lambda \bullet \text{Plasticité}_i + (1 - \lambda) \bullet \text{Stabilité}_i,$$

où S représente le degré d'influence,

i désigne un indice des points de données dans l'ensemble de données d'apprentissage actuel, $\lambda$ désigne une pondération,

Plasticité désigne un score de plasticité, et

Stabilité désigne un score de stabilité.

2. Procédé selon la revendication 1, où l'apprentissage du modèle actuel (S120) comprend :

le chargement, par l'unité d'apprentissage, de l'ensemble de données d'apprentissage de tampon, comprenant des données d'apprentissage sélectionnées en fonction d'un degré d'influence sur la performance de prédiction du modèle actuel dans un ensemble de données d'apprentissage passé lors de l'apprentissage continu ; et

l'entraînement du modèle actuel au moyen de l'ensemble de données d'apprentissage de tampon et de l'ensemble de données d'apprentissage actuel.

3. Procédé selon la revendication 1, où le calcul du degré d'influence (S170) comprend :

le calcul (S310), par l'unité de mise à jour (400), d'un score de plasticité représentant une première probabilité qu'une première valeur de prédiction du modèle actuel et une deuxième valeur de prédiction du modèle futur soient différentes l'une de l'autre pour les points de données dans l'ensemble de données d'apprentissage actuel ;

le calcul (S320), par l'unité de mise à jour (400), d'un score de stabilité représentant une deuxième probabilité que la première valeur de prédiction du modèle actuel et une troisième valeur de prédiction d'un premier modèle passé entraîné lors d'un cycle d'apprentissage précédent du modèle actuel, soient différentes l'une de l'autre pour les points de données dans l'ensemble de données d'apprentissage actuel ; et

la détermination (S330), par l'unité de mise à jour (400), d'une moyenne pondérée du score de plasticité et du score de stabilité en tant que degré d'influence.

4. Procédé selon la revendication 1, où le calcul d'un score de stabilité (S320) est exécuté conformément à l'équation

$$p(\hat{y}^{t-1} \neq \hat{y}^t \mid x^t) = 1 - p(\hat{y}_n^{t-1} \mid \hat{y}_n^t, x_n^t),$$

où $p(\hat{y}^{t-1} \neq \hat{y}^t \mid x^t)$ désigne le score de stabilité,

$x_n^t$ désigne les points de données dans l'ensemble de données d'apprentissage actuel,

$\hat{y}_n^{t-1}$ désigne une première valeur de prédiction d'un premier modèle passé, et

$\hat{y}_n^t$ désigne une deuxième valeur de prédiction du modèle actuel.

5. Procédé selon la revendication 1, où le calcul d'un score de plasticité (S310) est exécuté conformément à l'équation

$$p(\hat{y}^{t+1} \neq \hat{y}^t \mid x^t) = 1 - p(\hat{y}_n^{t+1} \mid \hat{y}_n^t, x_n^t),$$

où $p(\hat{y}^{t+1} \neq \hat{y}^t \mid x^t)$ désigne le score de plasticité,

$x_n^t$ désigne les points de données dans l'ensemble de données d'apprentissage actuel,

$\hat{y}_n^{t+1}$ désigne une première valeur de prédiction du modèle futur, et

$\hat{y}_n^{t}$ désigne une deuxième valeur de prédiction du modèle actuel.

6. Procédé de la revendication 5, où le calcul du score de plasticité (S310) détermine la valeur de prédiction du modèle futur conformément à l'équation

$$p(\hat{y}^{t+1} \mid x^{t}) = f(GP(\theta^{t}), x)_,$$

où $\hat{y}_n^{t+1}$ désigne la première valeur de prédiction du modèle futur,

$x$ désigne les points de données dans l'ensemble de données d'apprentissage actuel, et

$GP(\theta^t)$ désigne un vecteur de gradient prédit par le modèle futur par un modèle de prédiction de gradient.

7. Procédé selon la revendication 1, où le calcul du degré de variation (S130) détermine le degré de variation en fonction d'un degré de similarité entre :

un premier vecteur de gradient représentant un premier changement entre un premier vecteur de pondération du modèle actuel et un deuxième vecteur de pondération d'un premier modèle passé entraîné lors du cycle d'apprentissage précédent du modèle actuel, et

un deuxième vecteur de gradient représentant un deuxième changement entre le deuxième vecteur de pondération du premier modèle passé et un troisième vecteur de pondération d'un deuxième modèle passé entraîné lors d'un cycle d'apprentissage précédent du premier modèle passé.

8. Procédé selon la revendication 7, où le degré de similarité est calculé conformément à l'équation

$$CS = \frac{g_{t-1}^{T} g_t}{\|g_{t-1}\|_2 \|g_t\|_2}_,$$

où CS désigne le degré de similarité,

$g_t$ désigne le premier vecteur de gradient entre le premier vecteur de pondération du modèle actuel et le deuxième vecteur de pondération du premier modèle passé,

$g_{t-1}$ désigne le deuxième vecteur de gradient entre le deuxième vecteur de pondération du premier modèle passé et le troisième vecteur de pondération du deuxième modèle passé, et $g_{t-1}^{T}$ désigne un vecteur de transposition du deuxième vecteur de gradient.

9. Dispositif (10) pour le diagnostic d'un défaut, ledit dispositif comprenant :

une unité d'apprentissage (200) configurée pour entraîner un modèle actuel au moyen d'un ensemble de données d'apprentissage de tampon précédemment stocké dans un tampon et d'un ensemble de données d'apprentissage actuel ;

une unité de commutation (300) configurée pour :

calculer un degré de variation un degré de variation des modèles entraînés pendant au moins deux cycles d'apprentissage précédents du modèle actuel lors de l'apprentissage continu vers le modèle actuel ;

déterminer si le degré de variation est supérieur ou égal à une valeur de référence ; et

déterminer une mise à jour de l'ensemble de données d'apprentissage de tampon si le degré de variation est supérieur ou égal à la valeur de référence ;

une unité de mise à jour (400) configurée pour :

calculer un degré d'influence de chacun des points de données dans l'ensemble de données d'apprentissage actuel sur la performance de prédiction d'un modèle futur lorsque le modèle futur à entraîner lors d'un prochain cycle d'apprentissage du modèle actuel est entraîné au moyen de l'ensemble de données d'apprentissage actuel lors de l'apprentissage continu ; et

mettre à jour l'ensemble de données d'apprentissage de tampon par sélection d'un nombre prédéfini de points de données dans l'ordre des plus élevés aux plus faibles degrés d'influence ; et

une unité de détection (500) configurée pour détecter le défaut dans une image radiographique au moyen du modèle actuel lorsque l'image radiographique est entrée ;

où l'unité de mise à jour est configurée pour calculer le degré d'influence conformément à l'équation

$$S_i = \lambda \cdot \text{Plasticité}_i + (1 - \lambda) \cdot \text{Stabilité}_i,$$

où S représente le degré d'influence,

i désigne un indice des points de données dans l'ensemble de données d'apprentissage actuel,

$\lambda$ désigne une pondération,

Plasticité désigne un score de plasticité, et

Stabilité désigne un score de stabilité.

10. Dispositif (10) selon la revendication 9, où l'unité d'apprentissage (200) charge l'ensemble de données d'apprentissage de tampon, comprenant des données d'apprentissage sélectionnées en fonction d'un degré d'influence sur la performance de prédiction du modèle actuel dans un ensemble de données d'apprentissage passé lors de l'apprentissage continu ; et entraîne le modèle actuel au moyen de l'ensemble de données d'apprentissage de tampon et de l'ensemble de données d'apprentissage actuel.

11. Dispositif (10) selon la revendication 9, où l'unité de mise à jour (400) calcule un score de plasticité représentant une première probabilité qu'une première valeur de prédiction du modèle actuel et une deuxième valeur de prédiction du modèle futur soient différentes l'une de l'autre pour les points de données dans l'ensemble de données d'apprentissage actuel, calcule un score de stabilité représentant une deuxième probabilité que la première valeur de prédiction du modèle actuel et une troisième valeur de prédiction d'un premier modèle passé entraîné lors d'un cycle d'apprentissage précédent du modèle actuel, soient différentes l'une de l'autre pour les points de données dans l'ensemble de données d'apprentissage actuel, et détermine une moyenne pondérée du score de plasticité et du score de stabilité en tant que degré d'influence.

12. Dispositif (10) selon la revendication 9, où l'unité de mise à jour (400) calcule un score de stabilité conformément à l'équation

conformément à l'équation

$$p(\hat{y}^{t-1} \neq \hat{y}^t \mid x^t) = 1 - p(\hat{y}_n^{t-1} \mid \hat{y}_n^t, x_n^t),$$

où $p(\hat{y}^{t-1} \neq \hat{y}^t \mid x^t)$ désigne le score de stabilité,

$x_n^t$ désigne les points de données dans l'ensemble de données d'apprentissage actuel,

$\hat{y}_n^{t-1}$ désigne une première valeur de prédiction d'un premier modèle passé, et

$\hat{y}_n^t$ désigne une deuxième valeur de prédiction du modèle actuel.

# FIG. 1

# FIG. 2

# FIG. 3

basis

past learning model

.... second past
learning model

first past
learning model

current
learning model

future
learning model ....

t-2

t-1

t

t+1

.... second past
training data set

first past
training data set

current training
data set

future training
data set

....

past training data set

*FIG. 4*

collecting training data to
create current training data set
— S110

training current learning model
using buffer training data set and
current training data set
— S120

calculating degree of change
— S130

deleting current training data set
— S150

is this greater than or
equal to reference value?
— S140

NO

YES

training gradient prediction model
— S160

calculating degree of influence for each
of data points in
current training data set
— S170

updating buffer training data set by
selecting a predefined number of
data points
— S180

## FIG. 5

S160

selecting target layer and
storing weight changed by data points in
epoch units ⌐S210

creating derived training data ⌐S220

inputting weight vector ⌐S230

deriving weight difference vector ⌐S240

deriving loss through loss function ⌐S250

modifying weight ⌐S260

is condition satisfied? ⌐S270

NO

YES

completing learning ⌐S280

# FIG. 6

S170

S310

```
calculating plasticity score
```

S320

```
calculating stability score
```

S330

```
weighted average
```

# FIG. 7

S410

```
deriving radiographic test film
through radiography
```

S420

```
generating digitized radiographic image
```

S430

```
inputting digitized radiographic image
```

S440

```
detecting region of defect by
using learning model
```

## FIG. 8

BB

## FIG. 9

TN100

TN130
memory
ROM    RAM

TN110
processor

TN150
input interface device

TN160
output interface device

TN170

TN140
storage
device

TN120
transmission/
reception device

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Semiautonomous Pipeline Inspection Using Infrared Thermography and Unmanned Aerial Vehicles. **USAMENTIAGA RUBEN**. IEEE TRANSACTIONS ON INDUSTRIAL INFORMATICS. IEE SERVICE CENTER, 01 February 2024, vol. 20, 2540-2550